## Europäisches Patentamt

## European Patent Office

## Office européen des brevets

(19)

(11) **EP 0 463 536 B1**

(12) **EUROPÄISCHE PATENTSCHRIFT**

(45) Veröffentlichungstag und Bekanntmachung des Hinweises auf die Patenterteilung:
**21.02.1996 Patentblatt 1996/08**

(51) Int Cl.⁶: **F02M 65/00**

(21) Anmeldenummer: **91109919.0**

(22) Anmeldetag: **18.06.1991**

(54) **Verfahren zum Bestimmen des technischen Zustandes von Kraftstoffeinspritzsystemen und deren Bauteilen**

Method for determining the technical condition of fuel injection systems and their parts

Procédé pour déterminer l'état technique de systèmes d'injection de carburant et de leurs pièces

(84) Benannte Vertragsstaaten:
**DE FR GB**

(30) Priorität: **29.06.1990 DE 4020635**

(43) Veröffentlichungstag der Anmeldung:
**02.01.1992 Patentblatt 1992/01**

(73) Patentinhaber: **Nobis, Günter, Dr.-Ing.
D-73240 Wendlingen (DE)**

(72) Erfinder:
- **Nobis, Günter, Dr.-Ing.
  W-7317 Wendlingen (DE)**
- **Wirth, Klaus-Dieter, Dr.
  O-1035 Berlin (DE)**

(56) Entgegenhaltungen:
DD-A- 236 242                    DE-A- 2 516 300
DE-A- 2 812 545                  DE-A- 3 105 331

**EP 0 463 536 B1**

**Beschreibung**

Die Erfindung betrifft ein verfahren zum Bestimmen des technischen Zustandes von Kraftstoffeinspritzsystemen und deren Bauteilen gemäß dem Oberbegriff von Anspruch 1.

Sie ermöglicht es einerseits den Herstellern von Verbrennungsmotoren und Kraftfahrzeugen, mit minimalem Aufwand die Qualität einschließlich der Einstellwerte eines Kraftstoffeinspritzsystems am fertig montierten Motor zu kontrollieren und andererseits im Rahmen der technischen Überwachung sowie im Servicebereich Funktion und Einstellwerte des Einspritzsystems und seiner Bauteile umfassend zu kontrollieren und bei vorhandenen Mängeln die Fehlerursache ohne Demontagearbeiten zu lokalisieren.

Es sind bereits mehrere gattungsgemäße Verfahren allgemein bekannt. Bei einer Gruppe dieser Verfahren, die bei der technischen Überwachung breite Anwendung findet, wird mit Prüfgeräten die Konzentration einzelner Verbrennungsprodukte im Abgas (zum Beispiel Rußpartikel, $NO_x$, CO) unter definierten Prüfbedingungen ermittelt und mit gesetzlich festgelegten Grenzwerten verglichen. Wird der Grenzwert überschritten, so müssen die Bauteile kontrolliert werden.

Diese Bauteilprüfung stellt zugleich die zweite Gruppe dieser Verfahren dar, die vorwiegend im Servicebereich angewandt werden. Dabei werden Funktion und Einstellparameter einzelner Bauteile auf Prüfständen oder mittels Prüfgeräten kontrolliert. Mit Ausnahme des Parameters dynamischer Förderbeginn erfordern diese Verfahren Demontagearbeiten und meist den vollständigen Ausbau der Bauteile aus dem Fahrzeug, was mit hohem personellen Aufwand und entsprechenden Kosten verbunden ist.

Als nachteilig bei den Verfahren der ersten Gruppe erweist sich, daß in den gesetzlich vorgeschriebenen Grenzwerten weder die Spezifik der unterschiedlichen Fahrzeug- und Motorentypen noch die laufleistungsabhängige Veränderung der motorischen Parameter berücksichtigt werden und dem fortschreitenden Entwicklungsniveau der Motoren und Einspritzsysteme nur ganz grob mit veränderten Grenzwerten Rechnung getragen werden kann. Im Falle einer Grenzwertüberschreitung müssen alle Bauteile überprüft werden, was besonders aufwendig ist.

Ferner ist ein gattungsgemäßes Verfahren bekannt, bei dem eine Bestimmung des Zustandes des Einspritzsystems ohne Demontage von Bauteilen erfolgt (DE - A - 2 516 300).
Dieses Verfahren beruht auf der Auswertung von Druckänderungen in der Einspritzleitung während des Motorbetriebes. Neben dem Voreinspritzwinkel und der Motordrehzahl kann so der durchschnittliche Einspritzdruck für jeden Zylinder gemessen werden.

Für die Diagnose von Dieselmotoren ist ein weiteres Verfahren bekannt, bei dem während der freien Beschleunigung des Motors Meßdaten in Abhängigkeit von der Zeit erfaßt, verarbeitet und mit vorbekannten Sollwerten verglichen werden, wodurch die Funktion des Motors beurteilt werden kann (DE - A - 2 812 545).

Schließlich ist noch ein Verfahren bekannt, mit dem eine Fehlerfrüherkennung an Kraft- und Arbeitsmaschinen möglich ist (DD - A - 236 242).
Während des normalen Betriebes der Maschine werden Meßgrößen mit stochastischem Charakter erfaßt und mittels statistischer Signalverarbeitung Merkmalsvektoren ermittelt.
Anhand dieser Merkmalsvektoren erfolgt dann durch Anwendung von Mustererkennungsverfahren eine Klassifikation des Maschinenzustandes.
Grundlage der dabei angewandten Klassifikationsmethode ist eine sogenannte Belehrung im Neuzustand der jeweiligen Maschine (Bestimmung von Normalvektoren).
Für die Zustandsbewertung dieser Maschine wird dann während des späteren Betriebes ein aktueller Merkmalsvektor erfaßt und mit einem Mustererkennungsverfahren die Abweichung zu dem Normalvektor ermittelt. Bei Überschreiten vorher festgelegter Grenzen erfolgt automatisch eine Fehlermeldung.

Aufgabe der Erfindung ist es, die gattungsgemäßen Verfahren so weiterzuentwickeln, daß gegenüber einem Abgastest in einer nur unwesentlich höheren Prüfzeit der technische Zustand des Kraftstoffeinspritzsystems wesentlich genauer bestimmt und im Falle einer Mängelfeststellung zusätzlich die Fehlerursache demontagelos lokalisiert werden kann.

Diese Aufgabe wird erfindungsgemäß mit den kennzeichnenden Merkmalen des Anspruchs 1 gelöst.

Erfindungswesentlich an dem beanspruchten Verfahren ist zum einen, daß anstelle der bisher üblichen Bewertung jeweils nur einer Kenngröße eine komplexe Bewertung mehrerer Kennwerte tritt, die auf der Grundlage einer komplexen Betrachtung des Energieumwandlungsprozesses im Motor ausgewählt werden. Dabei handelt es sich einerseits um Kennwerte, die den Energieumwandlungsprozeß direkt beeinflussen, und andererseits um Kennwerte, die die Ergebnisse dieses Prozesses kennzeichnen. Zu letzteren Kennwerten gehören sowohl die Konzentrationswerte unterschiedlicher Verbrennungsprodukte im Abgas, aber auch solche, die die vom Motor abgegebene Energie erfassen.

Bei der Anwendung des Verfahrens werden in einem ersten Schritt unter definierten Prüfbedingungen die für einen Motortyp festgelegten Kennwerte an dem zu prüfenden Motor ermittelt, und in einem zweiten Schritt, der Bewertung des vorgefundenen technischen Zustandes, wird mit diesen Kennwerten eine mehrdimensionale Diskriminanzanalyse durchgeführt. Im Ergebnis dieser Diskriminanzanalyse wird das geprüfte Einspritzsystem einer von mehreren Zustandsklassen zugeordnet, wobei diese Zustandsklassen den ordnungsgemäßen Zustand und die praktisch auftretenden Fehlerursachen bezeichnen. Zum anderen ist es wesentlich, daß die der Diskriminanzanalyse zugrundeliegende Entscheidungsregel in einer Vorbereitungs- oder Lernphase bestimmt wird und so für eine Gruppe von Motoren- bzw. Fahrzeugtypen oder sogar für jeden Motoren- bzw. Fahrzeugtyp optimal gestaltet und damit der fortschreitende technische Entwicklungsstand unmittelbar berücksichtigt werden kann.

Weiterhin berücksichtigt die zur Anwendung kommende Entscheidungsregel sowohl die Häufigkeit des Auftretens der einzelnen Zustandsklassen in der Werkstatt- bzw. Überwachungspraxis als auch die bei einer falsch getroffenen Klassenzuordnung auftretenden Verluste (Fehlklassifikationsverluste). Damit wird erreicht, daß in der Summe der Entscheidungen minimale Verluste, das heißt minimale Folgekosten, entstehen. Bei der Bestimmung dieser Fehlklassifikationsverluste besteht die Möglichkeit, sowohl die ökonomischen Auswirkungen in der Werkstatt und für den Fahrzeugbetreiber als auch die ökologischen Auswirkungen einer falschen Klassen zuordnung zu berücksichtigen.

Die Vorteile der Anwendung des Verfahrens bestehen zum einen in einer wesentlichen Erhöhung der Genauigkeit, mit der der technische Zustand von Kraftstoffeinspritzsystemen bestimmt werden kann, wodurch die Umweltbelastung durch feste und gasförmige Schadstoffe im Abgas minimiert wird. Zum anderen werden bei ordnungsgemäßer Funktion des Einspritzsystems gleichzeitig die wesentlichen Leistungsparameter des Motors gewährleistet, wodurch einer ungerechtfertigten Verstellung der Fördermengengrenze zum Erreichen höherer Motorleistung begegnet und die technisch bedingte $CO_2$-Emission begrenzt werden kann. Ein weiterer Vorteil des Verfahrens besteht in der Minimierung des Prüf- und Reparaturaufwandes, was sich günstig auf die Bewältigung der technischen Überwachung des gesamten Fahrzeugbestandes auswirkt. Auch für die Fahrzeugbetreiber ergeben sich Vorteile, die sich in minimalen Folgekosten sowohl in der Werkstatt als auch beim weiteren Fahrzeugeinsatz äußern. Letztendlich erleichtert dieses Verfahren auch den Motoren- und Fahrzeugherstellern die Zustimmung zu schärferen Grenzwerten bzw. Prüfverfahren, weil sie an der Entwicklung der Entscheidungsregeln mitarbeiten können und dieses Verfahren die realen Gegebenheiten des Fertigungsprozesses und die nutzungsdauerbedingten Veränderungen der Motorenparameter berücksichtigt.

Nachfolgende Ausführungen sollen das Verständnis der Erfindung erleichtern.

Bevor die Diskriminanzanalyse an einem Prüfobjekt angewandt werden kann, muß in einer Vorbereitungs- bzw. Lernphase der konkrete Inhalt der Entscheidungsregel erarbeitet werden. Dazu sind mehrere Arbeitsschritte durchzuführen.

Im ersten Arbeitsschritt gilt es einerseits, die technischen Zustände zu definieren, die mittels Diskriminanzanalyse später voneinander unterschieden werden sollen. Andererseits sind bereits jetzt die Kennwerte festzulegen, die im Verfahren und in der Entscheidungsregel verwendet werden sollen und die den technischen Zustand möglichst gut widerspiegeln.

Die Vorauswahl dieser Kennwerte erfolgte auf der Grundlage der bereits erwähnten komplexen Betrachtung des Energieumwandlungsprozesses und unter Berücksichtigung der Möglichkeiten, diese Kennwerte mittels Diagnosegerät und geringem Aufwand zu bestimmen. Es handelt sich hierbei um zwei Arten von Kennwerten. Eine erste Art kennzeichnet die Ergebnisse des Energieumwandlungsprozesses. Zu diesen Kennwerten zählen

abgasseitig        -    die Rußpartikelkonzentration bzw. die Rauchdichte (Es können auch mehrere Kennwerte aus dem zeitlichen Verlauf des Rauchstoßes nach der Beschleunigungsmethode verwendet werden.)

-    die $NO_X$-Konzentration

-    die CO-Konzentration

motorseitig        -    das maximale Drehmoment bzw. die Winkelbeschleunigung im Bereich der Drehzahl des maximalen Drehmomentes

-    die Nennleistung bzw. das Maximum des Produktes aus Winkelbeschleunigung und Winkelgeschwindigkeit

-    das indizierte Moment bzw. die Summe von Winkelbeschleunigung und dem Betrag der Winkelverzögerung im Bereich der Drehzahl des maximalen Drehmomentes

Weitere ähnliche Kennwerte sind möglich.

Bei der zweiten Art handelt es sich um Kennwerte, die den Energieumwandlungsprozeß direkt beeinflussen. Solche Parameter sind

-    dynamischer Förderbeginn
-    Luftdruck, Lufttemperatur

- Luftfilterverschmutzung
- Zylinderdichtheit und
- Motortemperatur

In dieser Aufzählung nicht genannte Kennwerte, wie zum Beispiel Einspritzmenge, Einspritzdruck, Strahlbild der Einspritzdüse, entziehen sich einer demontagelosen Bestimmung und sind mittels Diskriminanzanalyse zugänglich zu machen.

Dieser prinzipielle Lösungsansatz ist noch dadurch zu verbessern, daß die Wirkung einiger Parameter, die den Energieumwandlungsprozeß direkt beeinflussen, neutralisiert wird, indem ein einheitlicher Ausgangszustand vor dem Bestimmen der Kennwerte hergestellt wird. Das betrifft den dynamischen Förderbeginn und die Luftfilterverschmutzung, die vorher zu kontrollieren und gegebenenfalls zu verändern sind. Unmittelbar vor der Kennwertbestimmung ist der Motor betriebswarm zu fahren, wodurch auch der Einfluß dieses Parameters minimiert werden kann. Zur Kennwertermittlung selbst finden die üblichen Meßverfahren Anwendung, unter anderem die Vollastbeschleunigung des nur durch das Trägheitsmoment der beschleunigten Massen belasteten Motors.

In einem zweiten Arbeitsschritt gilt es, experimentelle Untersuchungen an einer Stichprobe von Fahrzeugen bzw. Motoren (nachfolgend Objekte genannt) durchzuführen. Der technische Zustand der Objekte muß dabei so beschaffen sein, daß in jeder Zustandsklasse mehrere Objekte vorhanden sind. An jedem dieser Objekte sind die festgelegten Kennwerte nach einer einheitlichen Technologie zu ermitteln. Sie bilden für jedes Objekt einen Kennwertvektor.

Die Analyse dieser Daten ist Inhalt des dritten Arbeitsschrittes. Für jede Zustandsklasse ist die Verteilungsdichtefunktion zu bestimmen, die prinzipiell von jeder beliebigen Art sein kann. Ausgehend von den für die jeweilige Zustandsklasse vorliegenden Kennwertvektoren ist eine Klasse von Verteilungsdichtefunktionen auszuwählen und mittels statistischer Tests zu bestätigen. Die Parameter der konkreten Verteilungsdichtefunktion sind anschließend mittels statistischer Schätzverfahren zu bestimmen. Somit wird die Verteilungsdichtefunktion für jede Zustandsklasse ermittelt.

Damit die Entscheidungsregel auch die in der Praxis existierenden Probleme berücksichtigt, sind in einem vierten Arbeitsschritt zum einen die relativen Häufigkeiten des Auftretens der einzelnen Zustandsklassen, die sogenannten a priori-Wahrscheinlichkeiten, zu bestimmen. Diese können entweder aus den relativen Häufigkeiten der Objekte in den Zustandsklassen bei den experimentellen Untersuchungen berechnet oder aufgrund von Expertenerfahrung festgelegt werden. Grundsätzlich kann auch auf die Angabe von a priori-Wahrscheinlichkeiten verzichtet werden. In diesem Fall sind diese Werte für alle Zustandsklassen auf einen gleichen Wert größer Null zu setzen.

Zum anderen sind die Auswirkungen der Zuordnung eines Objektes zu einer falschen Zustandsklasse, die sogenannten Fehlklassifikationsverluste, zu ermitteln, wodurch in der Entscheidungsregel die Wirkung von Fehlentscheidungen minimiert wird. Es sind hierbei für alle Möglichkeiten einer falschen Zuordnung Verlustfaktoren zu bestimmen, die den wahren Verlust (Schaden) einer Fehlklassifikation entweder in absoluter Größe (zum Beispiel in DM) angeben oder auch normiert sein können. In die Berechnung dieser Verlustfaktoren sind sowohl ökonomische als auch ökologische Folgekosten aufzunehmen. Im Einzelfall kann es schwierig sein, die exakten Kosten zu ermitteln. Dann ist es erforderlich, diese Werte aufgrund von Expertenerfahrung zu schätzen.

Damit ist die Vorbereitungsphase abgeschlossen.

Bei der Anwendung des Verfahrens in der sogenannten Arbeitsphase werden mit einem oder mit mehreren Diagnosegeräten nach der festgelegten Technologie (Herstellung des Ausgangszustandes) alle festgelegten Kennwerte an einem Objekt mit unbekanntem technischen Zustand des Kraftstoffeinspritzsystems bestimmt. Sie bilden den Kennwertvektor x

$$x = (x_1, x_2, ..., x_m) \qquad (1)$$

mit m Kennwerten. Aufgabe der Diskriminanzanalyse ist es nun, dieses unbekannte Objekt einer Zustandsklasse zuzuordnen, mit dem Ziel, den erwarteten Verlust einer falschen Zuordnung zu minimieren.

Die Entscheidung läuft wie folgt ab. Für jede Zustandsklasse i wird der erwartete Verlust $S_i(x)$ ermittelt, falls das unbekannte Objekt dieser Zustandsklasse zugeordnet würde. Es gilt die Beziehung

$$S_i(x) = \pi_1 \cdot p_1(x) \cdot r_{1i} + \pi_2 \cdot p_2(x) \cdot r_{2i} + ... + \pi_k \cdot p_k(x) \cdot r_{ki} \qquad (2)$$

mit $\pi_j$     a priori-Wahrscheinlichkeit der Zustandsklasse j
$p_j(x)$     Wahrscheinlichkeitsdichte des Vektors x in der Zustandsklasse j
$r_{ji}$     Verlust bei falscher Zuordnung eines Objektes der Zustandsklasse j zur Zustandsklasse i
k     Anzahl der Zustandsklassen

Das unbekannte Objekt wird letztendlich der Zustandsklasse i zugeordnet, für die der Wert $S_i(x)$ minimal wird. Mit dieser Entscheidungsregel wird bei einer größeren Anzahl in dieser Art getroffener Entscheidungen der Gesamtverlust minimal. Der mittlere Gesamtverlust läßt sich mit folgender Beziehung berechnen

$$L = \sum_{i=1}^{k} \int_{W_i} S_i(x)\ dx \qquad\qquad (3)$$

wobei $W_i$ die Menge derjenigen Kennwertvektoren x darstellt, für die $S_i(x) \leq S_j(x)$ gilt (für alle $j = 1 \ldots k$).

In der Werkstattpraxis läßt sich dieses Verfahren zweckmäßigerweise in der Art einsetzen, daß die in der Vorbereitungsphase ermittelten Parameter der Verteilungsdichtefunktionen, der a priori-Wahrscheinlichkeiten und die Verlustfaktoren der Zustandsklassen sowie die programmtechnische Umsetzung der Entscheidungsregel in einen Rechner übertragen werden, so daß dort nach Übergabe eines aktuellen Kennwertvektors die Diskriminanzanalyse durchgeführt wird. Dieser Rechner kann sowohl der Mikrorechner eines speziellen Diagnosegerätes für Kraftstoffeinspritzsysteme als auch der Mikrorechner eines von mehreren Diagnosegeräten sein, die für die Kennwertbestimmung eingesetzt werden, oder aber auch ein normaler Personalcomputer.

Die Ausgabe der Ergebnisse der Diskriminanzanalyse erfolgt zweckmäßigerweise in Textform und enthält entweder den ermittelten technischen Zustand oder gibt die erforderlichen Einstell- oder Reparaturarbeiten an.

Nach diesen Erläuterungen wird nun ein Ausführungsbeispiel beschrieben. Es zeigen

Fig. 1     Konzentrationsellipsen der vier Zustandsklassen im Kennwertfeld ($p = 70\ \%$ und $p = 90\ \%$) und

Fig. 2     Kennwertfeld mit Trennkurven für die Zustandsbewertung mittels Diskriminanzanalyse (ohne a priori-Wahrscheinlichkeiten).

Im gewählten Beispiel steht die Aufgabe, den technischen Zustand des Kraftstoffeinspritzsystems und seiner Bauteile an einem 4-Zylinder-Dieselmotor demontagelos zu ermitteln.

Für die Anwendung des erfindungsgemäßen Verfahrens werden in der Vorbereitungsphase nachfolgend aufgeführte Zustandsklassen und Kennwerte festgelegt.

Zustandsklasse

1 -     ordnungsgemäße Funktion der Einspritzdüsen und ordnungsgemäße Einstellung der Einspritzpumpe
2 -     ordnungsgemäße Funktion der Einspritzdüsen und Fördermenge der Einspritzpumpe zu groß
3 -     ordnungsgemäße Funktion der Einspritzdüsen und Fördermenge der Einspritzpumpe zu gering
4 -     Strahlbild und/oder Einstellung der Einspritzdüsen nicht in Ordnung und Einstellung der Einspritzpumpe muß überprüft werden

Kennwerte

-     Winkelbeschleunigung im Bereich der Drehzahl des maximalen Drehmomentes

-     Rauchdichte, gemessen nach der Beschleunigungsmethode

Zur Herstellung des reproduzierbaren Ausgangszustandes für alle Messungen sind folgende Arbeiten durchzuführen:

-     Kontrolle und gegebenenfalls Austausch des Luftfilters

-     Kontrolle und gegebenenfalls Einstellung des dynamischen Förderbeginns

-     Motor betriebswarm fahren ($T_{\ddot{O}l} = 60 \ldots 70°C$)

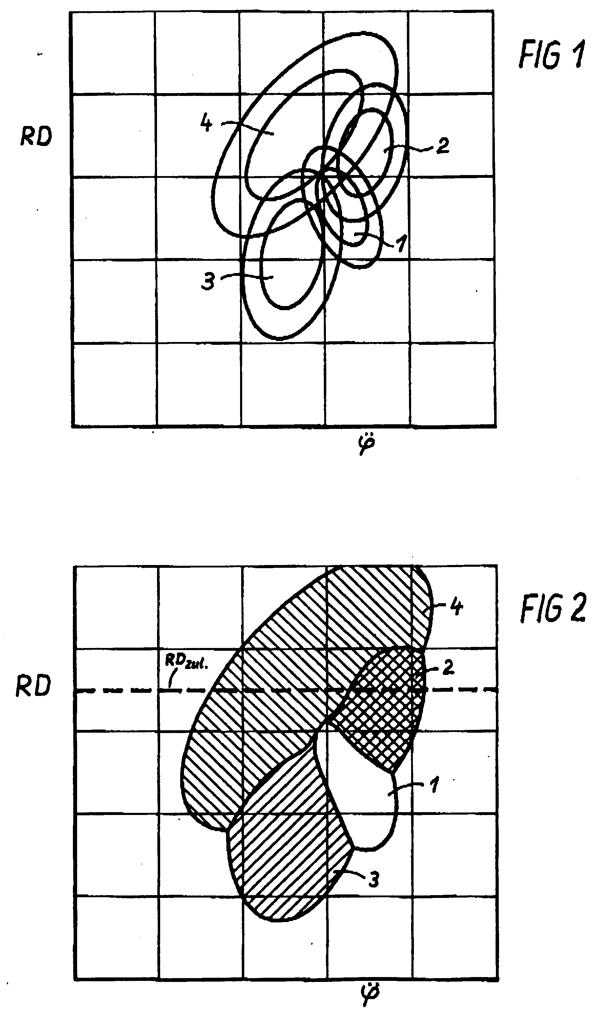

Die Messungen zur Ermittlung der Kennwerte werden in der Betriebsart Vollastbeschleunigung mit fünfmaliger Wiederholung durchgeführt und die Mittelwerte im zweidimensionalen Kennwertvektor verwendet. Die experimentellen Untersuchungen in der Vorbereitungsphase werden an sechsundzwanzig Fahrzeugen des gleichen Typs durchgeführt. An diesen Fahrzeugen werden im Anlieferungszustand die Kennwerte bestimmt und danach die Einspritzpumpe oder die Einspritzdüsen einer Bauteilprüfung unterzogen. Anschließend werden wieder die Kennwerte bestimmt, die noch nicht geprüften Bauteile einer Bauteilprüfung unterzogen und abschließend nochmals die Kennwerte bestimmt. Insgesamt liegen schließlich siebzig Kennwertvektoren mit jeweils bekanntem technischen Zustand vor. Für die vier Zustandsklassen werden nun die Parameter der Verteilungsdichtefunktionen bestimmt, wobei hier Normalverteilung gilt. Da in diesem Beispiel nur mit zweidimensionalen Kennwertvektoren gearbeitet wird, lassen sich die Verhältnisse grafisch darstellen. Fig. 1 enthält die Konzentrationsellipsen der Verteilungsdichte für $p = 70\%$ und $p = 90\%$ (jeweils die größere Ellipse) aller vier Zustandsklassen im Kennwertfeld. Dabei bedeuten RD Rauchdichte und $\ddot{\varphi}$ Winkelbeschleunigung im Bereich der Drehzahl des maximalen Drehmomentes. Die eingezeichnete Zahl bezeichnet die Nummer der Zustandsklasse. Am Ende der Vorbereitungsphase werden zum einen die a priori-Wahrscheinlichkeiten auf gleiche Werte gesetzt $\pi_1 = \pi_2 = \pi_3 = \pi_4 = \frac{1}{4}$. Zum anderen werden die Verlustfaktoren durch Experteneinschätzung wie folgt festgelegt:

| | | |
|---|---|---|
| $r_{12} = 4$ | $r_{13} = 4$ | $r_{14} = 7$ |
| $r_{21} = 8$ | $r_{23} = 0$ | $r_{24} = 3$ |
| $r_{31} = 3$ | $r_{32} = 0$ | $r_{34} = 3$ |
| $r_{41} = 16$ | $r_{42} = 8$ | $r_{43} = 8$ |

Mit diesen Daten lassen sich die Trennkurven zwischen den Zustandsklassen bestimmen. In Fig. 2 sind diese Trennkurven im Kennwertfeld dargestellt. Man erkennt, daß die Grundstruktur der Lage der Konzentrationsellipsen erhalten bleibt, aber klare Grenzen zwischen den Zustandsklassen vorhanden sind. In diese Darstellung ist zusätzlich ein Grenzwert für die Rauchdichte $RD_{zul.}$ eingezeichnet, wie es vom Gesetzgeber vorgesehen ist. Man erkennt, daß ein beträchtlicher Teil der fehlerhaft zu klassifizierenden Einspritzanlage in den Zustandsklassen 2 und 4 von dieser Grenzwertmethode als in Ordnung befunden werden. Gleichzeitig wird der Grad der Erhöhung der Genauigkeit der Zustandsbewertung mit dem erfindungsgemäßen Verfahren deutlich.

Die in der Praxis zu erwartenden Verhältnisse bei den unterschiedlichen Methoden können mit dem zu erwartenden mittleren Verlust angegeben werden. Verwendet man für diesen Vergleich die technischen Zustände und Kennwertvektoren der sechsundzwanzig untersuchten Fahrzeuge im Anlieferungszustand, so erhält man folgende Ergebnisse:

| Methode | mittlerer Verlust |
|---|---|
| - Verzicht auf jegliche Überprüfung und Wartung | 7 |
| - generelle Durchführung einer vollständigen Bauteilprüfung | 4 |
| - Durchführung einer vollständigen Bauteilprüfung nur wenn die Rauchdichte den Grenzwert überschreitet | 3,5 |
| - Durchführung einer Bauteilprüfung gemäß dem Ergebnis der Diskriminanzanalyse | 1 |

Diese Verhältnisse verdeutlichen die ökonomischen und ökologischen Vorteile des Verfahrens, die bereits bei einer noch sehr einfachen Ausbaustufe zu erzielen sind.

**Patentansprüche**

1. Verfahren zur demontagelosen Bestimmung des technischen Zustandes von Kraftstoffeinspritzsystemen und deren Bauteilen an fertig montierten bzw. an im Fahrzeug eingebauten Verbrennungsmotoren, dadurch gekennzeichnet, daß

a) vor der eigentlichen Prüfung ein einheitlicher, reproduzierbarer Ausgangszustand hergestellt wird, indem am Motor bzw. Fahrzeug solche Parameter kontrolliert und wenn notwendig korrigiert werden, die den Energieumwandlungsprozeß beeinflussen, wie beispielsweise der Zustand des Luftfilters, die Motortemperatur und der dynamische Förderbeginn,

b) im daran anschließenden Prüfzyklus der Verbrennungsmotor bzw. das Fahrzeug bei definierten Betriebsbedingungen betrieben wird und dabei solche Kennwerte meßtechnisch bestimmt werden, die die Ergebnisse des Energieumwandlungsprozesses sowohl in Form gasförmiger und/oder fester Verbrennungsprodukte als auch in Form der vom Motor abgegebenen Energie erfassen und in einer vorher festgelegten Reihenfolge einen aktuellen Kennwertvektor des geprüften Einspritzsystems darstellen,

c) mehrere Zustandsklassen i definiert werden, wobei die Zustandsklassen einen ordnungsgemäßen Zustand sowie spezielle Fehlerzustände umfassen.

d) in einer Lernphase für Fahrzeuge bekannten technischen Zustands für eine Mehrzahl von Fahrzeugen aus jeder Zustandsklasse jeweils ein Kennwertvektor ermittelt wird und damit für jede Zustandsklasse die mehrdimensionale, gemäß der Anzahl der Kennwerte im Kennwertvektor, Verteilungsdichtefunktion bestimmt wird,

e) die Wahrscheinlichkeit der Zugehörigkeit des aktuellen Kennwertvektors zur Verteilungsdichtefunktion jeder Zustandsklasse $p_j(x)$ ermittelt wird,

f) die erwarteten Zuordnungsverluste $S_i(x)$ für die Zuordnung des aktuellen Kennwertvektors zu jeder der Zustandsklassen nach folgender Formel ermittelt wird:

$$S_i(x) = \pi_1 * p_1(x) * r_{1i} + \pi_2 * p_2(x) * r_{2i} + ... + \pi_k * p_k(x) * r_{ki}$$

mit

$S_i(x)$     Verlust für die Zuordnung des Kennwertvektors x zur Zustandsklasse i

$\pi_j$     priori-Wahrscheinlichkeit der Zustandsklasse j, gemäß den relativen Häufigkeiten des Auftretens der einzelnen Zustandsklassen

$p_j(x)$     Wahrscheinlichkeit der Zugehörigkeit des Vektors x zur Zustandsklasse j

$r_{ji}$     Fehlklassifikationsverlust bei falscher Zuordnung eines Einspritzsystems der Zustandsklasse j zur Zustandsklasse i in direkter Geldsumme oder als normierter Faktor

$k$     Anzahl der definierten Zustandsklassen

und abschließend das geprüfte Einspritzsystem im Sinne der Bestimmung seines technischen Zustandes derjenigen Zustandsklasse i zugeordnet wird, für die der erwartete Zuordnungsverlust, also der Wert $S_i(x)$, minimal ist.

2. Verfahren nach Anspruch 1, dadurch gekennzeichnet, daß

a) als Kennwerte für die vom Motor als Ergebnis des Energieumwandlungsprozesses abgegebene Energie bzw. Leistung mindestens ein Kennwert,

wie z.B. maximales Drehmoment, Nennleistung und indiziertes Drehmoment bei der Drehzahl des maximalen Drehmomentes oder

Winkelbeschleunigung im Bereich der Drehzahl des maximalen Drehmomentes, das Maximum des Produktes aus Winkelbeschleunigung und Winkelgeschwindigkeit sowie die Summe von Winkelbeschleunigung und dem Betrag der Winkelverzögerung im Bereich der Drehzahl des maximalen Drehmomentes, verwendet wird und

b) als Kennwerte für die vom Motor als Ergebnis des Energieumwandlungsprozesses emittierten Verbrennungsprodukte

mindestens ein Kennwert der gasförmigen Verbrennungsprodukte, wie z.B. der Konzentration von CO oder $NO_x$, und/oder

mindestens ein Kennwert der festen Verbrennungsprodukte, wie z.B. der Rußpartikelkonzentration oder der Rauchtrübung, verwendet wird.

3. Verfahren nach Anspruch 1, dadurch gekennzeichnet, daß

der Kennwertvektor zur Berücksichtigung nutzungsdauerbedingter Veränderungen der Motorkennwerte mindestens einen Kennwert für die aktuelle Nutzungsdauer des Motors, z.B. in Form der km-Laufleistung oder des kumulierten Kraftstoffverbrauches, enthält.

4. Verfahren nach Anspruch 1, dadurch gekennzeichnet, daß

die a priori-Wahrscheinlichkeiten, die Parameter der Verteilungsdichtefunktionen sowie die Fehlklassifikationsverluste mit den Ergebnissen der praktischen Anwendung des Verfahrens verbessert werden, und damit das Verfahren insgesamt optimiert wird.

5. Verfahren nach einem oder mehreren der vorgenannten Ansprüche, dadurch gekennzeichnet, daß

a) das Verfahren für eine praktische Anwendung in der Art realisiert wird,

daß die programmtechnische Umsetzung der Algorithmen für die Bestimmung der Wahrscheinlichkeit der Zugehörigkeit des aktuellen Kennwertvektors zu den Zustandsklassen sowie die in der Lernphase ermittelten Parameter für die Entscheidung über die Zuordnung zu einer Zustandsklasse auf einen Rechner übertragen werden,

b) der Rechner entweder der Mikrorechner eines speziellen Diagnosegerätes für Kraftstoffeinspritzsysteme oder der Mikrorechner eines von mehreren zur Kennwertermittlung eingesetzten Diagnosegeräten oder aber auch ein normaler Personalcomputer ist,

c) diesem Rechner entweder die einzelnen aktuellen Kennwerte oder der aktuelle Kennwertvektor des geprüften Einspritzsystems zur Bestimmung seines technischen Zustandes zugeführt wird und

d) das Ergebnis der Zustandsbestimmung in Textform ausgegeben wird und dieser Text entweder den ermittelten technischen Zustand oder die erforderlichen Einstell- bzw. Reparaturarbeiten zum Inhalt hat.

**Claims**

1. A method of determining, without dismantling, the technical condition of fuel injection systems and parts thereof, on internal combustion engines which are fully assembled or which are fitted in a vehicle, characterised in that

a) before the actual test a uniform reproducible initial condition is produced, by those parameters which influence the energy conversion process such as for example the condition of the air filter, the engine temperature and the dynamic output beginning being monitored on the engine or vehicle and corrected if necessary,

b) in the subsequent test cycle the internal combustion engine or the vehicle is operated under defined operating conditions and in that operation a measuring procedure is used to determine those characteristic values which record the results of the energy conversion process both in the form of gaseous and/or solid combustion products and also in the form of the energy outputted by the engine and represent in a previously determined sequence a current characteristic value vector in respect of the injection system being tested,

c) a plurality of condition classes i are defined, wherein the condition classes include a regular condition and special fault conditions,

d) a respective characteristic value vector is ascertained in a learning phase for vehicles of known technical condition for a plurality of vehicles from each condition class and thus the multi-dimensional distribution density function, in accordance with the number of characteristic values in the characteristic value vector, is determined for each condition class,

e) the probability of the current characteristic value vector belonging to the distribution density function of each condition class $p_j(x)$ is ascertained,

f) the expected association losses $S_i(x)$ for the association of the current characteristic value vector with each of the condition classes is ascertained in accordance with the following formula:

$$S_i(x) = \pi_1 * p_1(x) * r_{1i} + \pi_2 * p_2(x) * r_{2i} + ... + \pi_k * p_k(x) * r_{ki}$$

wherein

$S_i(x)$ means the loss in respect of the association of the characteristic value vector x with the condition class i

$\pi_j$ means the a priori-probablity of the condition class j, in accordance with the relative frequencies of the occurrence of the individual condition classes

$p_j(x)$ means the probability of the vector x belonging to the condition class j

$r_{ji}$ means the misclassification loss in the event of false association of an injection system of the condition class j with the condition class i in direct money terms or as a standardised factor, and

$k$ means the number of the defined condition classes,

and finally the tested injection system is associated for the purpose of determining its technical condition with that condition class i for which the expected association loss, that is to say the value $S_i(x)$, is at a minimum.

2. A method according to claim 1 characterised in that

a) at least one characteristic value such as for example maximum torque, rated output and indicated torque at the speed of rotation of the maximum torque or angular acceleration in the region of the speed of rotation of the maximum torque, the maximum of the product of angular acceleration and angular speed and the sum of angular acceleration and the amount of angular deceleration in the region of the speed of rotation of the maximum torque is used as the characteristic values in respect of the power or energy outputted by the engine as the result of the energy conversion process, and

b) at least one characteristic value of the gaseous combustion products such as for example the level of concentration of CO or $NO_x$ and/or at least one characteristic value in respect of the solid combustion products such as for example the level of soot particle concentration or the level of smoke cloud emission is used as the characteristic values in respect of the combustion products emitted by the engine as the result of the energy conversion process.

3. A method according to claim 1 characterised in that the characteristic value vector, for taking account of changes in the engine characteristic values which are caused by the period of use thereof, includes at least one characteristic value in respect of the current period of use of the engine, for example in the form of the distance travelled in kilometres or the cumulative fuel consumption.

4. A method according to claim 1 characterised in that a priori-probabilities, the parameters of the distribution density functions and the misclassification losses are improved with the results of practical application of the method, and thus the method overall is optimised.

5. A method according to one or more of the preceding claims characterised in that

a) the method is performed for a practical use in such a way that conversion by programming procedures of the algorithms for determining the probability of the current characteristic value vector belonging to the condition classes and the parameters ascertained in the learning phase for the decision about the association with a condition class are transferred on to a computer,
b) the computer is either the microcomputer of a special diagnostic apparatus for fuel injection systems or the microcomputer of one of several diagnostic apparatuses which are used for ascertaining characteristic values or however also a normal personal computer,
c) either the individual current characteristic values or the current characteristic value vector of the injection system being tested is fed to said computer to determine the technical condition of the injection system being tested, and
d) the result of determining the condition of the system is outputted in text form and the content of that text is either the technical condition ascertained or the required adjustment or repair operations.

## Revendications

1. Procédé pour détérminer - sans avoir besoin d'un démontage -l'état technique de systèmes d'injection de carburant et de leurs pièces sur des moteurs à combustion interne complètement montés ou bien sur des moteurs à combustion interne installés dans le véhicule,
**caractérisé par le fait**

a) que l'on réalise, avant d'effectuer l'examen proprement dit, un état initial unitaire qui peut être reproduit, en contrôllant et en corrigeant si nécessaire sur le moteur même ou sur le véhicule les paramètres qui influent sur le processus de transformation de l'énergie, tels que l'état du filtre à air, la température du moteur ainsi que le commencement de l'admission dynamique,
b) que le moteur à combustion interne ou bien le véhicule est par la suite, au cours du cycle d'examen qui suit, actionné dans des conditions de fonctionnement bien définies et que l'on détermine alors par mesurage les paramètres qui caractérisent les résultats du processus de transformation de l'énergie obtenus aussi bien sous forme de produits de combustion gazeux et ou solides que sous forme de l'énergie dégagée par le moteur et qui représentent dans un ordre bien défini auparavant, un vecteur de paramètres actuel du système d'injection soumis à l'examen,
c) que l'on définit plusieurs classes d'état i, les classes d'état comprennent un état conforme aux règles ainsi que des états d'erreurs particuliers,
d) que dans une phase d'apprentissage pour des véhicules d'état technique connu est déterminé respectivement un vecteur de paramètres dans chaque classe d'état pour une multitude de véhicules et que l'on détermine par la suite pour chaque classe d'état la fonction de densité de distribution à plusieurs dimensions selon le nombre des paramètres sur le vecteur de paramètres.
e) que l'on détermine la probabilité d'appartenance du vecteur de paramètres actuel à la fonction de densité de distribution de chaque classe d'état $p_j(x)$,
f) que les pertes d'attribution $S_i(x)$ attendues pour l'attribution du vecteur de paramètres actuel à chacune des classes d'état sont déterminées par la formule suivante:

$$S_i(x) = \pi_1{}^* p_1(x){}^* r_{1i} + \pi_2{}^* p_2(x){}^* r_{2i} + \ldots + \pi_k{}^* p_k(x){}^* r_{ki}$$

avec

$S_i(x)$     perte pour l'attribution du vecteur de paramètres x à la classe d'état i

$\pi_j$ — probabilité à priori de la classe d'état j, selon les fréquences relatives de l'intervention de chaque classe d'état

$p_j(x)$ — probabilité d'appartenance du vecteur x à la classe d'état j

$r_{ji}$ — perte de fausse classification dans le cas d'une fausse attribution d'un système d'injection de la classe d'état j à la classe d'état i en somme d'argent direct ou en tant que facteur normalisé

k — nombre des classes d'état définies

et que le système d'injection soumis à l'examen est enfin dans le sens de la détermination de son état technique, attribué à celle des classes d'état i pour laquelle la perte d'attribution attendue, c'est-à-dire la valeur $S_i(x)$ est minimale.

2. Procédé selon la revendication 1, caractérisé par le fait

a) que les paramètres utilisés caractérisant l'énergie ou bien la puissance qui est débitée par le moteur en tant que résultat du processus de transformation de l'énergie, comptent parmi eux du moins un paramètre, tel que le couple maximal, la puissance nominale et le couple indiqué au nombre de tours du couple maximal ou l'accélération angulaire dans le domaine du nombre de tours du couple maximal, le maximum du produit formé de l'accélération angulaire et de la vitesse angulaire ainsi que la somme formée de l'accélération angulaire et de la valeur du retard angulaire dans le domaine du nombre de tours du couple maximal et

b) que les paramètres utilisés caractérisant les produits de combustion qui sont rejetés par le moteur en tant que résultat du processus de transformation de l'énergie, comptent parmi eux du moins un paramètre des produits de combustion gazeux, tel que la concentration de CO ou de $NO_x$ et / ou du moins un paramètre des produits de combustion solides, tel que la concentration de particules de suie ou le trouble de la fumée.

3. Procédé selon la revendication 1, caractérisé par le fait que le vecteur de paramètres présente du moins un paramètre indiquant la vie utile actuelle du moteur, comme par exemple sous forme du kilométrage qu'il est apte à parcourir ou de la consommation de carburant cumulée pour tenir ainsi compte de modifications des paramètres du moteur qui sont dues à la durée d'utilisation.

4. Procédé selon la revendication 1, caractérisé par le fait que les probabilités à priori, les paramètres des fonctions de densité de distribution ainsi que les pertes de fausse classification sont améliorés par les résultats de l'application pratique du procédé et que le procédé tout entier est par conséquent optimisé.

5. Procédé selon une ou plusieurs des revendications susmentionnées, caractérisé par le fait

a) que pour une application pratique, le procédé est réalisé de telle sorte que la réalisation sous forme d'un programme des algorithmes utilisés pour la détermination de la probabilité d'appartenance du vecteur de paramètres actuel aux classes d'état ainsi que les paramètres pour la décision relative à l'attribution à une classe d'état, qui ont été déterminés dans la phase d'apprentissage, sont transférés dans un ordinateur,

b) que ledit ordinateur est soit le microordinateur d'un appareil de diagnostic spécial pour des systèmes d'injection de carburant soit le microordinateur d'un appareil de diagnostic parmi un groupe de tels appareils utilisés pour la détermination de paramètres ou encore un ordinateur individuel d'usage,

c) que cet ordinateur est alimenté soit des paramètres particuliers actuels soit du vecteur de paramètres actuel du système d'injection soumis à l'examen pour déterminer son état technique et

d) que le résultat de la détermination de l'état est fourni sous forme d'un texte et que le contenu traité de ce texte est soit l'état technique déterminé soit les travaux de réglage ou bien de réparation requis.

FIG 1

FIG 2